## Europäisches Patentamt

## European Patent Office

## Office européen des brevets

(19)

(11) Veröffentlichungsnummer: **0 073 877**
**B1**

(12) **EUROPÄISCHE PATENTSCHRIFT**

(45) Veröffentlichungstag der Patentschrift:
21.08.85

(51) Int. Cl.⁴: **H 01 M 6/18, H 01 M 4/58**

(21) Anmeldenummer: **82103620.9**

(22) Anmeldetag: **28.04.82**

(54) *Galvanische Festkörperzelle mit Ionen- und elektronenleitender Kathode, deren aktives Material aus Metallchloriden besteht.*

(30) Priorität: **29.08.81 DE 3134289**

(43) Veröffentlichungstag der Anmeldung:
**16.03.83 Patentblatt 83/11**

(45) Bekanntmachung des Hinweises auf die Patenterteilung:
**21.08.85 Patentblatt 85/34**

(84) Benannte Vertragsstaaten:
**DE FR GB**

(56) Entgegenhaltungen:
**EP - A - 0 049 145**
**EP - B - 0 000 785**
**DE - A - 2 817 701**
**DE - B - 2 517 883**

(73) Patentinhaber: **VARTA Batterie Aktiengesellschaft, Am Leineufer 51, D-3000 Hannover 21 (DE)**

(72) Erfinder: **Dennstedt, Welf, Dr., Altenhainer Strasse 14, D-6233 Kelkheim (DE)**
Erfinder: **Scheunpflug, Dagmar, Kirchstrasse 2, D-6232 Bad Soden 3 (DE)**

(74) Vertreter: **Kaiser, Dieter Ralf, Dipl.-Ing., Gundelhardtstrasse 72, D-6233 Kelkheim/Ts. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein galvanisches Element mit einem Festkörperelektrolyten, einer negativen Elektrode aus festem Natrium und einer positiven Elektrode, die im Gemisch mit einem reduzierbaren aktiven Material eine Leitsubstanz enthält, welche sowohl ionen- als auch elektronenleitend ist.

Elektrochemische Zellen mit ausschließlich festen aktiven Bestandteilen, insbesondere solche mit festen negativen Alkalimetallelektroden und einem Festkörperelektrolyten mit einem für das betreffende Alkalimetall spezifischen Ionenleitervermögen, lassen sich bei Raumtemperatur im allgemeinen nur mit geringem Nutzeffekt entladen. Solche Zellen ermöglichen zwar zu Beginn der Entladung eine Strombelastung von einigen $\mu A/cm^2$ bei einer Entladespannung, die in üblicher Relation zur Ruhespannung steht, jedoch geht die der Zelle entnehmbare Leistung bald zurück, und der Hauptteil der aktiven Kathodenmasse bleibt unentladen.

Die Entladbarkeit der Kathode läßt sich durch Zugabe von Leitsubstanzen verbessern. Hierzu kann das Festkörperelektrolytmaterial dienen, indem man durch Zumischen von Festelektrolytpulver zur Kathodensubstanz eine besonders innige Verzahnung zwischen Elektrolyt und positiver Elektrode mit entsprechend vielen Punktkontakten zwischen den Teilchen der Pulverschüttung herstellt.

Die Anwesenheit eines Ionenleiters in der Kathodensubstanz reicht jedoch nicht aus, wenn beim Entladevorgang nicht zusätzlich Reaktionsprodukte mit gutem Leitvermögen entstehen, welche auch die Abgabe von Elektronen an das aktive Material vermitteln, also Elektronenleiter sind. Eine zufriedenstellende Coulomb-Ausbeute bei einer Festkörperzelle setzt damit Ionenleitfähigkeit und Elektronenleitfähigkeit der positiven Elektrode voraus.

Aus der DE-AS 25 17 883 ist ein Material für die positive Elektrode eines Festkörperelements bekannt, dem eine besonders gute Elektronenleitfähigkeit zugeschrieben wird. Das bekannte Material setzt sich aus Mischungen von Metallchalkogeniden mit Metallbromiden oder -jodiden zusammen, wobei die Metalle zu der Reihe Pb, Ag, Cu, Sb, Hg, As, Bi, Cr, Fe, Co, Ni, Mo und Sn gehören.

Der Erfindung liegt die Aufgabe zugrunde, speziell für eine Festkörperzelle mit einer festen Natriumanode neue Kathodenmaterialien zu erschließen, die mit Unterstützung einer sowohl ionen- als auch elektronenleitenden Substanz zu einer guten Entladung beim Raumtemperatur befähigt sind.

Die Aufgabe wird erfindungsgemäß dadurch gelöst, daß das aktive Material der positiven Elektrode ein im Bereich 70—350° C schmelzendes Metallchlorid ist, welches in einem Schichten- oder Molekülgitter kristallisiert und bei Raumtemperatur entladbar ist.

Es hat sich gezeigt, daß unter den Metallchloriden diejenigen, bei denen im Gitterverband die Chlorionen der stark polarisierenden Wirkung entweder relativ kleiner oder zumindest hochgeladener Metallkationen ausgesetzt sind und die daher niedersymmetrische Schichten- oder Molekülgitterstrukturen bilden, elektrochemisch besonders gut ausnutzbar sind. Gegenüber anderen Metallchloriden, welche in höhersymmetrischen Koordinationsgittern mit reinem Ionenbindungscharakter kristallisieren, weisen die erfindungsgemäß zu verwendenden Metallchloride aufgrund der schwächeren Gitterkräfte relativ niedrige Schmelz- und Verdampfungspunkte auf. Im Extremfall der Molekülgitter liegen Strukturen vor, bei denen abgesonderte Komplexe (Moleküle) nur noch von van der Waals'schen Kräften zusammengehalten werden. Der Temperaturbereich, in welchem die erfindungsgemäß eingesetzten Metallchloride schmelzbar sind, erstreckt sich von etwa 70° C bis 350° C. Bei Raumtemperatur sind alle fest und gut entladbar.

Mit besonderem Vorteil wird als aktives Material ein Chlorid aus der Reihe $AlCl_3$, $MoCl_5$, $BiCl_3$, $WCl_6$, $FeCl_3$, $GaCl_3$ und $TaCl_5$ einzeln oder in Mischungen untereinander, ausgewählt. Geeignet sind auch die entsprechenden Oxidchloride wie beispielsweise $MoOCl_4$, $MoO_2Cl_2$ oder $WOCl_4$. Um ein erfindungsgemäßes Kathodenmaterial zu erhalten, in welchem beide Leitungsmechanismen, nämlich Ionen- und Elektronenleitung, wirksam sind, kann das Metallchlorid bzw. das Chloridgemisch wahlweise mit Titansulfid oder einer Mischung aus Graphit und Festkörperelektromaterial untermischt. Da in Festkörperzellen mit festen Natriumanoden als Festkörperelektrolyt ein Mischkristall des quaternären Systems $Na_2O-ZrO_2-SiO_2-P_2O_5$, beispielsweise die Verbindung $Na_3Zr_2Si_2PO_{12}$ (Nasicon) mit besonderem Vorteil verwendet wird, bietet sich der gleiche Festkörperelektrolyt auch als bevorzugte Ionenleiterkomponente neben Graphit in einer erfindungsgemäßen Kathodenmischung an.

Von dem elektronenleitenden $TiS_2$ ist es bekannt, daß es unter Energieabgabe Alkalimetalle gemäß der Reaktionsgleichung

$$TiS_2 + x\,Na \rightarrow Na_xTiS_2$$

(wobei $0 < x < 1$) bei sich einzulagern vermag. Eine durch diesen Vorgang entladbare Zelle besitzt, wenn $X = 0$, eine Ruhespannung von ca. 2,2 Volt, bei $X = 0,9$ nur noch 1,4 Volt. Wie Erfahrungen gezeigt haben, vollzieht sich jedoch die Entladereaktion im Falle der Intercalaction von Natrium nur zögernd, was beispielsweise mit den kleineren $Li^+$-Ionen — beide werden in Ionenform eingelagert — nicht beobachtet wird. Das Potential der positiven Elektrode gemäß der Erfindung wird daher im wesentlichen von dem Metallchlorid bestimmt. Gleichwohl bleibt dem $TiS_2$ die wichtige Rolle der Leitsubstanz erhalten, da es für die $Na^+$-Ionen, indem es sie aufzunehmen und abzugeben in der Lage ist, ein durchlässiges Medium darstellt und auf diese Weise einen Transport dieser Ionen entlang dem Aktivitätsgefälle besorgt. Die beim Entladen von reinem $TiS_2$ beobachtete Polarisation tritt bei der erfindungsgemäßen Verwendung im Gemisch mit Metallchloriden nicht auf.

Bei Verwendung eines Graphit-Festkörperelektrolyt-Gemisches als Leitsubstanz entspricht es einer günstigen Ausführungsform der erfindungsgemäßen positiven Elektrode, wenn das Metallchlorid mit dem Graphit ein Intercalat bildet. So wurde gefunden, daß beispielsweise $AlCl_3$ leicht von Graphit in molekularer Form intercaliert wird und daß es als Intercalationsverbindung mit besonders guter Stromausbeute entladbar ist.

Dem $TiS_2$ geht die Fähigkeit, mit erfindungsgemäßen Metallchloriden ähnliche Intercalate zu bilden, offenbar ab. Hier genügt es, daß das Metallchlorid mit dem elektronenleitenden $TiS_2$ sowie einem ionenleitenden Material gut kontaktiert ist, so daß es unmittelbar, d. h. ohne chemische Aufbereitung zu einer Intercalationsverbindung, eingesetzt werden kann.

Abschließend werden zwei Beispiele für Zellen mit einer erfindungsgemäßen Kathode gegeben.

### Beispiel 1

Eine Zelle mit einer Kathode aus einem Gemisch von 30 Vol.-% $TiS_2$ und 70 Vol.-% $AlCl_3$, einer Anode aus Natrium und einem Festkörper-Elektrolyten vom Nasicon-Typ kann in einem Schichtaufbau hergestellt und bei Raumtemperatur entladen werden. Die Belastung beträgt ca. 25 µA/cm$^3$ und die Entladespannung liegt bei 1,7 V. Die Entladung erfolgt bei konstanter Spannung und ist als Umsetzung des Aluminiumchlorids anzusehen. Das $TiS_2$ in dieser Zelle hat die Funktion eines Leitgerüstes. Würde $TiS_2$ ebenfalls entladen, so müßte die Entladespannung gemäß dem Fortschreiten einer Intercalierungsreaktion absinken.

### Beispiel 2

Ein weiteres Beispiel ist eine Kathode aus 30 Vol.-% $TiS_2$ und 70 Vol.-% $MoCl_5$. Auch an dieser Elektrode können die Wirkungen des Leitmaterials $TiS_2$ und des aktiven Materials $MoCl_5$ erkannt werden: Eine $MoCl_5$-Elektrode ohne $TiS_2$ zeigt bei Entladung eine kontinuierlich fallende Spannungskurve, beginnend bei ca. 3 V. Eine $MoCl_5$-Elektrode mit $TiS_2$ zeigt zu Beginn der Entladung mit ca. 30 µA/cm$^2$ ebenfalls die fallende Spannungskurve, jedoch sinkt diese nur bis auf einen Wert von etwa 2 V und behält diesen Wert bei. Bei einer Spannung oberhalb von 2,2 Volt wird $TiS_2$ aus thermodynamischen Gründen nicht entladen. Eine Entladespannung von 2 V liegt in dem Bereich, in dem das $TiS_2$ normalerweise entladen wird. Da diese Spannung über einen längeren Entladezeitraum gehalten wird, obwohl die $MoCl_5$-Elektrode mit anderen Entladehilfen bei diesem Potential keinen Haltepunkt hat, zeigt sich, daß $TiS_2$ bei dieser Spannung an der Entladung beteiligt ist. Die Beteiligung kann aber nicht in einer Entladung des $TiS_2$ bestehen, denn die würde erfahrungsgemäß nach kurzer Zeit zu einer Polarisation führen. Es zeigt sich die besondere Eigenschaft des $TiS_2$, im nichtentladenen Zustand eine gute Leitfähigkeit für Na-Ionen zu besitzen, ein gutes, während der Entladung beständiges, durchgängiges Leitgerüst zu bilden und gleichzeitig einen guten Kontakt zu $MoCl_5$ zu vermitteln.

### Patentansprüche

1. Galvanisches Element mit einem Festkörperelektrolyten, einer negativen Elektrode aus festem Natrium und einer positiven Elektrode, die im Gemisch mit einem reduzierbaren aktiven Material eine Leitsubstanz enthält, welche sowohl ionen- als auch elektronenleitend ist, dadurch gekennzeichnet, daß das aktive Material der positiven Elektrode ein im Bereich 70—350° C schmelzendes Metallchlorid ist, welches in einem Schichten- oder Molekülgitter kristallisiert und bei Raumtemperatur entladbar ist.

2. Galvanisches Element nach Anspruch 1, dadurch gekennzeichnet, daß das Metallchlorid aus $AlCl_3$, $MoCl_5$, $BiCl_3$, $WCl_6$, $FeCl_3$, $GaCl_3$ oder aus Mischungen dieser Chloride besteht.

3. Galvanisches Element nach den Ansprüchen 1 und 2, dadurch gekennzeichnet, daß die Leitsubstanz $TiS_2$ oder ein Gemisch aus Graphit und Festkörperelektrolytmaterial ist.

4. Galvanisches Element nach Anspruch 3, dadurch gekennzeichnet, daß das Festkörperelektrolytmaterial aus Mischkristallen des quaternären Systems $Na_2O—ZrO_2—SiO_2—P_2O_5$ gebildet ist.

5. Galvanisches Element nach den Ansprüchen 3 und 4, dadurch gekennzeichnet, daß das Metallchlorid in Graphit intercaliert ist.

### Claims

1. Galvanic cell with a solid body electrolyte, a negative electrode of solid sodium and a positive electrode which contains a conducting substance mixed with a reducible active material that is both ion-conducting and electron-conducting, characterised in that the active material of the positive electrode is a metal chloride melting in the range 70° C—350° C, which is crystallised in a layer or molecular lattice and can be discharged at room temperature.

2. Galvanic cell according to claim 1, characterised in that the metal chloride consists $AlCl_3$, $MoCl_5$, $BiCl_3$, $WCl_6$, $FeCl_3$, $GaCl_3$ or mixtures of these chlorides.

3. Galvanic cell according to claims 1 and 2, characterised in that the conducting substance

ist $TiS_2$ or a mixture of graphite and solid body electrolyte material.

4. Galvanic cell according to claim 3, characterised in that the solid body electrolyte material is formed from mixed crystals of the quaternary system $Na_2O-ZrO_2-SiO_2-P_2O_5$.

5. Galvanic cell according to claims 3 and 4, characterised in that the metal chloride is intercalated in graphite.

**Revendications**

1. Elément galvanique avec un électrolyte solide, une électrode négative en sodium solide et une électrode positive qui contient, en mélange avec un matériau actif réductible, une substance conductrice aussi bien les ions que les électrons, élément caractérisé en ce que le matériau actif de l'électrode positive est un chlorure métallique fondant entre 70 et 350° C, qui cristallise dans un réseau de couches ou de molécules et qui est susceptible d'être déchargé à la température du local.

2. Elément galvanique selon la revendication 1, caractérisé en ce que le chlorure métallique est constitué de $AlCl_3$, $MoCl_5$, $BiCl_3$, $WCl_6$, $FeCl_3$, $GaCl_3$, ou bien de mélanges de ces chlorures.

3. Elément galvanique selon les revendications 1 et 2, caractérisé en ce que la substance conductrice est du $TiS_2$ ou bien un mélange de graphite et d'un matériau d'électrolyte solide.

4. Elément galvanique selon la revendication 3, caractérisé en ce que le matériau d'électrolyte solide est constitué de cristaux mixtes du système quaternaire $Na_2O-ZrO_2-SiO_2-P_2O_5$.

5. Elément galvanique selon les revendications 3 et 4 caractérisé en ce que le chlorure métallique est intercalé dans du graphite.